# EUROPÄISCHE PATENTANMELDUNG

(11) **EP 0 841 635 A1**
(43) Veröffentlichungstag der Anmeldung: **13.05.1998**
(21) Anmeldenummer: 97118577.2
(22) Anmeldetag: 25.10.1997
(51) Int. Cl.: G06M 3/06, G01F 15/06, G01D 5/39

(54) **Ablesevorrichtung für Zählwerke, insbesondere mechanische Rollenzählwerke**

(30) Priorität: 06.11.1996 DE 19645656
(71) Anmelder: Raab Karcher Energy Services GmbH, 45131 Essen (DE)
(72) Erfinder: Wolff, Manfred, Dipl.-Ing., 68526 Ladenburg (DE)
(74) Vertreter: Stark, Walter, Dr.-Ing.

(57) **Zusammenfassung**

Die Erfindung bezieht sich auf den Ablesevorgang von Zählwerken, insbesondere mechanischen Rollenzählwerken. Um eine Möglichkeit zu schaffen, mit der der Ablesevorgang weniger aufwendig und kostengünstiger gestaltet werden kann, wobei diese Möglichkeit prinzipiell für alle Zählwerkgrößen gleichermaßen einsetzbar sein soll, und auch eine Nachrüstung bereits bestehende Zähler möglich sein soll, wird eine Ablesevorrichtung für Zählwerke, insbesondere mechanische Rollenzählwerke, mit einer elektronischen Bilderfassung und einer Ausgabeeinrichtung vorgeschlagen.

## Beschreibung

Die Erfindung bezieht sich auf den Ablesevorgang von Zählwerken, insbesondere mechanischen Rollenzählwerken.

Aus der Praxis sind Rollenzählwerke bekannt, die z. B. für die Verbrauchsmessung von Kalt- und Warmwasser, Heizung, Gas und Strom verwendet werden. Zu Abrechnungszwecken müssen diese Zählwerke in bestimmten Abständen, z. B für die Jahresabrechnung, abgelesen werden. Bisher geschieht dies in der Praxis vor allem durch Servicepersonal, das vor Ort den Zählerstand abliest und notiert, was sehr kostenintensiv und umständlich ist.

Um den Arbeitsaufwand in der Weiterverarbeitung der abgelesenen Daten zu verringern, werden mittlerweile maschinenlesbare Formulare verwendet, in die der Zählerstand jeweils eingetragen und später zur Auswertung maschinell ausgelesen wird.

Weiterhin wurden Zählwerke entwickelt, die an der kleinsten Zähleinheit eine Nocke aufweisen, mit der ein Impulsgeber gesteuert wird, so daß bei entsprechender Vernetzung diese Impulse an anderer Stelle gezählt und ausgewertet werden können. Nachteilig hierbei ist zum einen, daß die Vernetzung der Impulsgeber mit der zentralen Auswertestation aufwendig und kostspielig ist und zum anderen durch Fehler in der Impulsübertragung häufig Abweichungen zwischen dem realen Zählerstand und dem über die Anzahl der Impulse ermittelten Zählerstand auftreten. Außerdem läßt sich in der Auswertung durch die Anzahl der Impulse nur der aktuelle Zählerstand als Summe aus dem alten Zählerstand und der entsprechenden Anzahl der zwischenzeitlichen Impulse errechnen, so daß bei Fehlern in der Datenverarbeitung keine direkte Abfrage oder Übermittlung des tatsächlichen Zählerstandes möglich ist.

Es sind ferner elektronische Zähler mit einer seriellen Schnittstelle, wie z. B. M-Bus o. ä., entwickelt worden, die bisher jedoch nur als kleine Zähler, wie z. B. Wohnungswasseruhren etc., realisiert worden sind. Solche Zähler sind zum einen sehr kostspielig und zum anderen bisher nicht als Großzähler, wie z. B. Zählwerke bei Gasübergabestationen, Hauswasserzähler etc., verwirklicht worden.

Aufgabe der Erfindung ist es, eine Möglichkeit zu schaffen, mit der der Ablesevorgang weniger aufwendig und kostengünstiger gestaltet werden kann und die genannten Nachteile vermieden werden können, wobei diese Möglichkeit prinzipiell für alle Zählwerkgrößen gleichermaßen einsetzbar sein soll, und auch eine Nachrüstung bereits bestehende Zähler möglich sein soll.

Diese Aufgabe wird dadurch gelöst, daß eine Ablesevorrichtung für Zählwerke, insbesondere mechanische Rollenzählwerke, mit einer elektronischen Bilderfassung und einer Ausgabeeinrichtung geschaffen wird, so daß der Ablesevorgang automatisch erfolgt und der abgelesene Zählerstand über die Ausgabeeinrichtung ausgelesen werden kann.

Bei einer bevorzugten Ausführungsform kann für die elektronische Bilderfassung ein System von Fotodioden oder eine Kamera, insbesondere CCD-Kamera, vorgesehen sein, so daß die Zählwerkanzeige in die Ablesevorrichtung eingelesen wird und über die Ausgabeeinrichtung ausgelesen werden kann.

Vorteilhafterweise kann die Ausgabeeinrichtung eine Schnittstelle sein, an die zum Ablesen ein Datenablesegerät angeschlossen wird. Hierdurch vereinfacht sich der Datentransfer deutlich, und es können keine Fehler beim Eintragen des Zählerstands in ein maschinenlesbares Formular einerseits und beim Auslesen diese Formulares andererseits auftreten.

Erfindungsgemäß kann die Ausgabeeinrichtung ein Funksender sein, der die abgelesenen Daten per Funk an einen Empfänger übermittelt, so daß der abgelesene Zählerstand direkt an eine Auswerteeinrichtung übermittelt werden kann und somit der Servicepersonalaufwand drastisch reduziert wird.

Bei einer bevorzugten Ausführungsform kann die Funkübertragung vom Sender zum Empfänger hin über das "Global System for Mobile Communication (GSM)" erfolgen, was den Vorteil hat, daß auf ein bereits bestehendes Funknetz, das teilweise auch für Datenübertragungen benutzt wird, zurückgegriffen werden kann. Hierbei kann z. B. ein sogenanntes SMS-Telegramm (Short-Message-Standard-Telegramm) verwendet werden, was eine deutliche Kostenvergünstigung bewirkt.

Vorteilhafterweise kann vor der Ausgabeeinrichtung eine Datenverarbeitungseinrichtung vorgesehen sein, die vorzugsweise eine Mustererkennungsfunktion enthalten kann. Hierdurch kann bereits über Mustererkennung aus der sehr komplexen Datenmenge der optischen Information eine Reduktion auf den reinen Zahlenwert des abgelesenen Zählerstands erfolgen, so daß die zu übertragende Datenmenge stark verringert wird. Dies erhöht einerseits deutlich die Übertragungssicherheit und trägt andererseits auch zu einer Kostensenkung bei.

Erfindungsgemäß kann eine Datenbank mit eingespeicherten Referenzmustern vorgesehen sein und die Musterkennungsfunktion das von der elektronischen Bilderfassung erfaßte Bild der Zählwerkoberfläche mit den eingespeicherten Referenzmustern vergleichen, wobei jedem Referenzmuster ein bestimmter Wert zugeordnet ist. Hierbei kann die Datenbank entweder nur die Referenzmuster für einen bestimmten Zählwerktyp beinhalten oder aber eine komplette Bibliothek, mit der die gängigsten Zählwerktypen abgedeckt werden. Der dem Referenzmuster zugeordnete Wert kann entweder der Zahlenwert sein, der dem abgelesenen Zählerstand entspricht, oder aber ein anderer Wert, wobei sichergestellt sein muß, daß eine eindeutige Zuordnung von Wert und Referenzmuster gewährleistet ist.

Bei einer bevorzugten Ausführungsform kann die Ablesevorrichtung eine Sicherungseinrichtung zur Sicherung gegen Manipulation oder mißbräuchliche Benutzung der Ablesevorrichtung aufweisen. Dies kann entweder ein Kontrollmuster sein, dessen eine Seite auf der Zählwerkoberfläche und dessen andere Seite auf der Ablesevorrichtung festgeklebt ist, wobei das Kontrollmuster beim Ablesen des Zählwerkes ebenfalls von der elektronischen Bilderfassung erfaßt wird und beim Entfernen der Ablesevorrichtung von dem Zählwerk zerstört würde, oder die Sicherungseinrichtung kann ein Sensor analog zu den bei Alarmanlagen verwendeten Glasbruchsensoren sein, der auf der Zählwerkoberfläche einerseits und auf der Ablesevorrichtung andererseits befestigt ist und beim Entfernen der Ablesevorrichtung von dem Zählwerk beschädigt wird. Bei Erkennen einer Beschädigung des aufgeklebten Kontrollmusters oder bei Manipulation signalisierenden Sensorwerten gibt dementsprechend die Ablesevorrichtung ein Manipulationskennsignal. Weiterhin kann die Sicherungseinrichtung aber auch ein Mikroschalter sein, der die korrekte Positionierung der Ablesevorrichtung auf dem Zählwerk detektiert und bei Entfernung der Ablesevorrichtung vom Zählwerk eine Sicherungsschaltung aktiviert. Unabhängig von der Art der Sicherungseinrichtung kann die Manipulationsmeldung beim normalen Ablesen des Zählwerkes über die Ausgabeeinrichtung mitgeteilt werden. Bei Ablesevorrichtungen, die als Ausgabeeinrichtung einen Funksender aufweisen, besteht auch die Möglichkeit, die Manipulationsmeldung ohne Zeitverzögerung sofort weiterzugeben. Das Zurücksetzen auf den normalen Stand oder aber die Behebung der Beschädigungen kann auf jeden Fall nur durch Servicepersonal erfolgen.

Vorteilhafterweise kann zwischen der elektronischen Bilderfassung und dem Zählwerk ein durchsichtiges Prisma vorgesehen sein, so daß ohne Veränderungen oder Entfernen der Ablesevorrichtung auch ein visuelles Ablesen des Zählwerkes möglich ist.

Bei einer bevorzugten Ausführungsform kann im Bereich der elektronischen Bilderfasssung eine Beleuchtungseinrichtung vorgesehen sein, so daß unabhängig von den örtlichen Gegebenheiten zum Zeitpunkt der Ablesung durch die Ablesevorrichtung eine ausreichende Helligkeit gewährleistet ist. Vorzugsweise beinhaltet die Beleuchtungseinrichtung eine Stromquelle und wird von der Ablesevorrichtung nur kurzfristig zum Zeitpunkt der elektronischen Bilderfassung aktiviert, so daß auch mit einer sehr klein dimensionierten Stromquelle eine hohe Betriebsdauer sichergestellt ist.

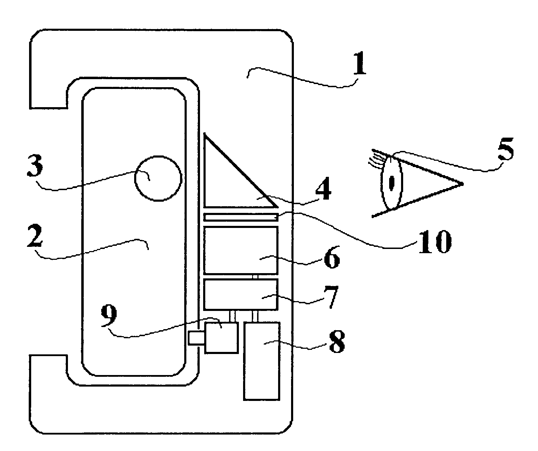

Im folgenden wird ein in der Zeichnung dargestelltes Ausführungsbeispiel der Erfindung erläutert. Die einzige Figur zeigt eine in Durchsicht dargestellte schematische Seitenansicht einer Ablesevorrichtung 1 für Zählwerke, insbesondere mechanische Rollenzählwerke 2. Die Ablesevorrichtung 1 ist dabei so ausgebildet, daß Teile des Gehäuses der Ablesevorrichtung 1 zumindest partiell das Rollenzählwerk umgreifen und somit die Ablesevorrichtung 1 in ihrer Position halten.

In Höhe der Zählwerkanzeige 3 ist ein Prisma 4 angeordnet, so daß sowohl ein Betrachter 5 als auch eine elektronische Bilderfassung 6 den Zählwerkstand ablesen können. An die elektronische Bilderfassung 6 sind eine Datenverarbeitungseinrichtung 7 und ein Funksender 8 zur Übermittlung der abgelesenen Daten angeschlossen. Zählwerkseitig weist die Ablesevorrichtung 1 einen Mikroschalter 9 auf, der die ordnungsgemäße Position der Ablesevorrichtung 1 am Rollenzählwerk 2 detektiert und bei Entfernung der Ablesevorrichtung 1 vom Zählwerk 2 eine Sicherungsschaltung in der Datenverarbeitungseinrichtung 7 aktiviert. Zwischen dem Prisma 4 und der elektronischen Bilderfassung 6 ist eine Beleuchtungseinrichtung 10 angeordnet.

## Patentansprüche

1. Ablesevorrichtung für Zählwerke, insbesondere mechanische Rollenzählwerke, mit einer elektronischen Bilderfassung und einer Ausgabeeinrichtung.

2. Ablesevorrichtung nach Anspruch 1, dadurch gekennzeichnet, daß für die elektronische Bilderfassung ein System von Fotodioden vorgesehen ist.

3. Ablesevorrichtung nach Anspruch 1, dadurch gekennzeichnet, daß für die elektronische Bilderfassung eine Kamera, insbesondere CCD-Kamera vorgesehen ist.

4. Ablesevorrichtung nach einem der Ansprüche 1 bis 3, dadurch gekennzeichnet, daß die Ausgabeeinrichtung eine Schnittstelle ist, an die zum Ablesen ein Datenablesegerät angeschlossen wird.

5. Ablesevorrichtung nach einem der Ansprüche 1 bis 3, dadurch gekennzeichnet, daß die Ausgabeeinrichtung ein Funksender ist, der die abgelesenen Daten per Funk an einen Empfänger übermittelt.

6. Ablesevorrichtung nach Anspruch 5, dadurch gekennzeichnet, daß die Funkübertragung vom Sender zum Empfänger hin über das "Global System for Mobile Communication (GSM)" erfolgt.

7. Ablesevorrichtung nach einem der Ansprüche 1 bis 6, dadurch gekennzeichnet, daß vor der Ausgabeeinrichtung eine Datenverarbeitungseinrichtung vorgesehen ist.

8. Ablesevorrichtung nach Anspruch 7, dadurch gekennzeichnet, daß die Datenverarbeitungseinrichtung eine Mustererkennungsfunktion beinhaltet.

9. Ablesevorrichtung nach Anspruch 8, dadurch gekennzeichnet, daß eine Datenbank mit eingespeicherten Referenzmustern vorgesehen ist und die Mustererkennungsfunktion das von der elektronischen Bilderfassung erfaßte Bild der Zählwerkoberfläche mit den eingespeicherten Referenzmustern vergleicht, wobei jedem Referenzmuster ein bestimmter Wert zugeordnet ist.

10. Ablesevorrichtung nach einem der Ansprüche 1 bis 9, dadurch gekennzeichnet, daß die Ablesevorrichtung eine Sicherungseinrichtung zur Sicherung gegen Manipulation oder mißbräuchliche Benutzung der Ablesevorrichtung aufweist.

11. Ablesevorrichtung nach Anspruch 10, dadurch gekennzeichnet, daß die Sicherungseinrichtung ein Kontrollmuster ist, dessen eine Seite auf der Zählwerkoberfläche und dessen andere Seite auf der Ablesevorrichtung festgeklebt ist, wobei das Kontrollmuster beim Ablesen des Zählwerkes ebenfalls von der elektronischen Bilderfassung erfaßt wird.

12. Ablesevorrichtung nach Anspruch 10, dadurch gekennzeichnet, daß die Sicherungseinrichtung ein Sensor analog zu den bei Alarmanlagen verwendeten Glasbruchsensoren ist, der auf der Zählwerkoberfläche einerseits und auf der Ablesevorrichtung andererseits befestigt ist.

13. Ablesevorrichtung nach Anspruch 10, dadurch gekennzeichnet, daß die Sicherungseinrichtung ein Mikroschalter ist, der die korrekte Positionierung der Ablesevorrichtung auf dem Zählwerk detektiert und bei Entfernung der Ablesevorrichtung vom Zählwerk eine Sicherungsschaltung aktiviert.

14. Ablesevorrichtung nach einem der Ansprüche 1 bis 13, dadurch gekennzeichnet, daß zwischen der elektronischen Bilderfassung und dem Zählwerk ein durchsichtiges Prisma vorgesehen ist.

15. Ablesevorrichtung nach einem der Ansprüche 1 bis 14, dadurch gekennzeichnet, daß im Bereich der elektronischen Bilderfassung eine Beleuchtungseinrichtung vorgesehen ist.
